(19) Europäisches Patentamt
European Patent Office
Office européen des brevets

(11) EP 4 421 910 B1

(12) EUROPEAN PATENT SPECIFICATION

(45) Date of publication and mention of the grant of the patent:
**30.09.2026 Bulletin 2026/40**

(21) Application number: **23868422.9**

(22) Date of filing: **29.08.2023**

(51) International Patent Classification (IPC):
***H01M 4/36** (2006.01)* ***H01M 4/62** (2006.01)*
***H01M 4/525** (2010.01)* ***H01M 4/505** (2010.01)*
***H01M 4/131** (2010.01)* ***H01M 10/052** (2010.01)*
***H01M 4/02** (2006.01)*

(52) Cooperative Patent Classification (CPC):
**H01M 4/02; H01M 4/13; H01M 4/131; H01M 4/36; H01M 4/366; H01M 4/505; H01M 4/525; H01M 4/62; H01M 4/625; H01M 10/052; H01M 10/0562;** H01M 2004/021; H01M 2004/028; H01M 2300/0068; Y02E 60/10

(86) International application number:
**PCT/KR2023/012816**

(87) International publication number:
**WO 2024/063367 (28.03.2024 Gazette 2024/13)**

# (54) ELECTRODE FOR ALL-SOLID-STATE BATTERY

ELEKTRODE FÜR FESTKÖRPERBATTERIE

ÉLECTRODE POUR BATTERIE TOUT SOLIDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.09.2022 KR 20220119465**

(43) Date of publication of application:
**28.08.2024 Bulletin 2024/35**

(73) Proprietor: **LG Energy Solution, Ltd.**
**Seoul 07335 (KR)**

(72) Inventors:
- **KIM, Jeonggil**
  **Daejeon 34122 (KR)**
- **KWON, Hyejin**
  **Daejeon 34122 (KR)**
- **KIM, Sohee**
  **Daejeon 34122 (KR)**
- **KIM, Taegon**
  **Daejeon 34122 (KR)**
- **KIM, Myeongsoo**
  **Daejeon 34122 (KR)**
- **KIM, Ki Tae**
  **Daejeon 34122 (KR)**
- **LEE, Choonghyeon**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 772 764**
**JP-A- 2015 041 543**
**KR-A- 20120 024 855**
**KR-A- 20170 015 634**
**KR-A- 20200 060 370**
**KR-A- 20200 092 100**
**US-A1- 2019 067 678**
**US-A1- 2020 161 645**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 421 910 B1

## Description

[Technical Field]

The present invention relates to an electrode for an all-solid-state battery. Particularly, the present invention relates to an electrode for an all-solid-state battery comprising granules, and the granules include a core comprising an active material, a first conductive material and a binder, and a coating layer comprising a solid electrolyte and a second conductive material.

[Background Art]

Various batteries are being researched to overcome the limitations of conventional lithium secondary batteries in terms of capacity, safety, power output, enlargement and microminiaturization.
For example, metal-air batteries, which have a very large theoretical capacity compared to lithium secondary batteries, all-solid-state batteries, which do not have the risk of explosion in terms of safety, supercapacitors in terms of power output, NaS batteries or redox flow batteries (RFBs) in terms of enlargement, and thin film batteries in terms of microminiaturization are being continuously researched in academia and industry.
Among them, all-solid-state batteries are batteries that replace the liquid electrolyte conventionally used in lithium secondary batteries with the solid electrolyte, and since no flammable solvents are used in the batteries, there is no ignition or explosion conventionally caused by the decomposition reaction of the electrolyte, which can greatly improve safety. In addition, since a Li metal or Li alloy can be used as the negative electrode material, it has the advantage of dramatically improving the energy density per mass and volume of the battery.
Sulfide-based solid electrolytes have the highest ionic conductivity of $10^{-3}$ to $10^{-2}$ S/cm among solid electrolytes, and their ductility allows them to contact interfaces well, which is advantageous for improving resistance, but they are sensitive to moisture, generating a $H_2S$ gas when in contact with moisture, so a very dry environment needs to be established during the manufacture. In addition, the aggregation of active materials and solid electrolytes needs to be improved, and high-density electrodes are required due to reduced porosity.
Therefore, inventor(s) of the present invention has continuously researched an electrode for an all-solid-state battery to solve the challenges faced in the relevant art and has completed the present invention.

[Prior art references].

[patent reference].

(Patent reference 1) Korean Patent Laid-open Publication No. 10-2016-0146737
US 2019/0067678 A1 discloses an electrode for an all-solid-state battery, comprising granules including a core containing an active material and a first conductive material; and a coating layer containing a solid electrolyte and a second conductive material, and disposed in contact with an outside of the core.
WO2017/218150 A1 discloses an electrode for a all-solid-state battery, comprising granules including a core containing an active material, a first conductive material and a binder; and a coating layer containing a solid electrolyte and a second conductive material, and disposed in contact with an outside of the core, wherein the first and second conductive materials have different sizes or shapes.

[Disclosure]

[Technical Problem]

In order to improve the performance of an electrode for an all-solid-state battery, the present invention aims to provide an electrode for an all-solid-state battery in which granules including a core comprising an active material, a first conductive material and a binder, and a coating layer comprising a solid electrolyte and a second conductive material are introduced to the electrode active material layer.

[Technical Solution]

According to a first aspect of the present invention, there are provided granules comprising a core including an active material, a first conductive material and a binder, and a coating layer comprising a solid electrolyte and a second conductive material, and disposed in contact with an outside of the core, wherein the first and second conductive materials have different sizes or shapes,

wherein the first and second conductive materials are cylindrical conductive materials,
wherein the first conductive material has an aspect ratio of 4000 to 6000 and a BET specific surface area of 100 $m^2/g$ to 300 $m^2/g$, and
wherein the second conductive material has an aspect ratio of 100 to 300 and a BET specific surface area of 10 $m^2/g$ to 30 $m^2/g$.

According to one embodiment of the present invention, the first conductive material has an average diameter of 10 nm to 30 nm.

According to one embodiment of the present invention, the second conductive material has an average diameter of 100 nm to 500 nm.

According to one embodiment of the present invention, the first conductive material comprises carbon nanotubes.

According to one embodiment of the present invention, the second conductive material comprises carbon nanofibers.

According to one embodiment of the present invention, the active material is a positive electrode active material, and the positive electrode active material is selected from the group consisting of $LiCoO_2$, $LiNiO_2$, $LiMnO_2$, $Li_2MnO_3$, $LiMn_2O_4$, $Li(Ni_aCo_bMn_c)O_2$ (wherein 0<a<1, 0<b<1, 0<c<1, and a+b+c=1), $LiNi_{1-y}Co_yO_2$ (wherein 0<y<1), $LiCo_{1-y}Mn_yO_2$, $LiNi_{1-y}Mn_yO_2$ (wherein 0<y<1), $Li(Ni_aCo_bMn_c)O_4$ (wherein 0<a<2, 0<b<2, 0<c<2, and a+b+c=2), $LiMn_{2-z}Ni_zO_4$ (wherein 0<z<2), $LiMn_{2-z}Co_zO_4$ (wherein 0<z<2), and combinations thereof.

According to one embodiment of the present invention, the solid electrolyte comprises a sulfide-based solid electrolyte.

According to one embodiment of the present invention, the granules are spherical particles having a diameter of 30 μm to 150 μm.

According to one embodiment of the present invention, the weight ratio of the sulfide-based solid electrolyte in the coating layer is from 15% to 40% by weight, based on the total weight of the granules.

According to one embodiment of the present invention, the weight ratio of the second conductive material in the coating layer is 0.01% to 1% by weight, based on the total weight of the granules.

According to one embodiment of the present invention, the core comprises 85% to 99.8% by weight of active material, 0.1% to 10% by weight of binder, and 0.1% to 10% by weight of first conductive material, based on the total weight of the core.

According to one embodiment of the present invention, the weight ratio of the first and second conductive materials is from 5:1 to 30:1.

According to one embodiment of the present invention, the coating layer is formed by applying it on the core by the mechanofusion method.

[Effects of the Invention]

The electrode for an all-solid-state battery according to one embodiment of the present invention includes granules comprising a core comprising an active material, a first conductive material and a binder, and a coating layer comprising a solid electrolyte and a second conductive material, wherein the first conductive material and the second conductive material are adjusted to have different specifications in consideration of the functionality of the core and the coating layer in the granules.

Accordingly, the granules form an excellent electrical network in the interior of the granules even under the all-solid-state conditions, which contributes to the improvement of the performance of the battery when applied as an electrode for an all-solid-state battery.

[Description of Drawings]

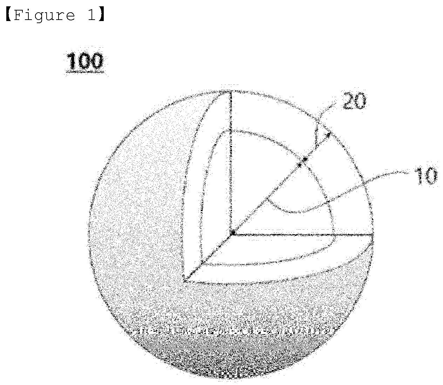

FIG. 1 is a schematic illustration of the shape of a granule according to one embodiment of the present invention.

[Best Mode]

The embodiments provided by the present invention can be achieved by the following description. It is to be understood that the following description describes preferred embodiments of the present invention, but the present invention is not necessarily limited thereto.

For the properties described herein, if the measurement conditions and methods are not specifically stated, the properties are measured according to the measurement conditions and methods commonly used by those skilled in the art.

In one aspect of the present invention, there are provided granules comprising a core comprising an active material, and a coating layer comprising a solid electrolyte. The granules can be used in an electrode for an all-solid-state battery. To understand the structure of the granules, FIG. 1 provides a drawing schematically illustrating the shape of the granule according to one embodiment of the present invention. As shown in FIG. 1, the core (10) is spherical and located in the interior of the granule, and the coating layer (20) is disposed to surround the core. The granule (100) comprising the core and the coating layer is a spherical particle. Here, a spherical particle does not necessarily mean a perfectly spherical particle, but generally includes the concept of round particle. The core comprises an active material, a first conductive material and a binder, and the coating layer comprises a solid electrolyte and a second conductive material. The powdered particulate active material is bonded by the binder solution together with the conductive material to grow into particles having a certain range of specifications to form the core. A slurry comprising a solid electrolyte and a second conductive material is applied to the core to form a coating layer. The coating layer may be a single layer covering the entire area of the core, or may consist of several layers covering a portion of the core.

According to one embodiment of the present invention, the material included in the core and the material included in the coating layer have different specifications. The specifications refer to criteria suitable for use in the core or the coating layer according to one embodiment of the present invention, and the specificationsare size or shape. The size or shape relates to aspect ratio and BET specific surface area described below. In this specification, to distinguish between the material contained in the core and the material contained in the coating layer, the conductive material contained in the core is referred to as the first conductive material, and the conductive material contained in the coating layer is referred to as the second conductive material.

The first conductive material constitutes the core together with the active material and the binder, and becomes an electrical pathway for the active material located in the spherical core. The first conductive material may be uniformly distributed so as to be in contact with most of the active material, while reducing the amount of the conductive material, which is advantageous for improving the energy density of the electrode. To achieve this objective, the first conductive material is a cylindrical conductive material. The cylindrical shape can be deformed, such as bending under external pressure. According to one embodiment of the present invention, the first conductive material has an average diameter of 10 nm to 30 nm. The average diameter is an arithmetic average of the diameters of the circles in a column, as measured by distinguishable particles in a scanning electron microscope (SEM) image. The circle is interpreted in a broad sense, not limited to a perfect circle. Specifically, the average diameter of the first conductive material may be 10 nm or more, 11 nm or more, 12 nm or more, 13 nm or more, 14 nm or more, 15 nm or more, 30 nm or less, 29 nm or less, 28 nm or less, 27 nm or less, 26 nm or less, or 25 nm or less, and may be 10 nm to 30 nm, 13 nm to 28 nm, or 15 nm to 25 nm. By using a relatively thin conductive material in the core, the volume of the conductive material in the granules can be reduced and the amount of active material can be increased.

The first conductive material has an aspect ratio of 4000 to 6000. The aspect ratio is calculated by the following formula 1, wherein the lengths of the long axis and the short axis used in formula 1 are measured from the particles distinguishable in the SEM image.

Aspect ratio = Length of the long axis/Length of the short axis [Formula 1].

The length of the long axis means the longest of the perpendicular distances between two parallel tangents of the particle, and the length of the short axis means the shortest of the perpendicular distances between two parallel tangents of the particle. In a cylindrical shape, the length of the long axis may be the height, and the length of the short axis may be the diameter. Since the length of the long axis is equal to or longer than the length of the short axis, the aspect ratio has a value of 1 or more. Specifically, the aspect ratio of the first conductive material may be 4000 or more, 4100 or more, 4200 or more, 4300 or more, 4400 or more, 4500 or more, 6000 or less, 5900 or less, 5800 or less, 5700 or less, 5600 or less, 5500 or less, 4000 to 6000, 4300 to 5800, or 4500 to 5500. The larger the aspect ratio, the more favorable it may be for the conductive material to form an electrical network within the granules.

The first conductive material has a BET specific surface area of 100 $m^2/g$ to 300 $m^2/g$. The BET specific surface area is a specific surface area measured by the BET method, which can be calculated from the amount of mass gas adsorption at a liquid nitrogen temperature (77 K) using, for example, BELSORP-mino II manufactured by BEL Japan. In specific, the BET specific surface area of the first conductive material is 100 $m^2/g$ or more, 110 $m^2/g$ or more, 120 $m^2/g$ or more, 130 $m^2/g$ or more, 140 $m^2/g$ or more, 150 $m^2/g$ or more, and 300 $m^2/g$ or less, 290 $m^2/g$ or less, 280 $m^2/g$ or less, 270 $m^2/g$ or less, 260 $m^2/g$ or less, or 250 $m^2/g$ or less, and may be 100 $m^2/g$ to 300 $m^2/g$, 130 $m^2/g$ to 280 $m^2/g$, or 150 $m^2/g$ to 250 $m^2/g$. Within the above BET specific surface area range, the first conductive material can increase accessibility to the active material and the solid electrolyte.

According to one embodiment of the present invention, the granules are spherical particles having a diameter of 30 μm to 150 μm. Here, since a spherical particle does not mean a perfectly spherical particle, the diameter means the largest value of the distances from any point on the surface of the particle to another point on the surface. Specifically, the

diameter of the granules may be 30 $\mu$m or more, 35 $\mu$m or more, 40 $\mu$m or more, 45 $\mu$m or more, 50 $\mu$m or more, 150 $\mu$m or less, 145 $\mu$m or less, 140 $\mu$m or less, 135 $\mu$m or less, 130 $\mu$m or less, 125 $\mu$m or less, or 120 $\mu$m or less, and may be 30 $\mu$m to 150 $\mu$m, 40 $\mu$m to 135 $\mu$m, or 50 $\mu$m to 120 $\mu$m. The size of the granules in the above range forms an appropriate level of pores in the granular layer to aid in the introduction of additional sulfide-based solid electrolytes or in the transformation and migration of materials by electrochemical reactions. The granules may comprise a core and a coating layer as shown in FIG. 1, wherein the core may comprise two-thirds or more of the diameter of the granules.

The electrode for an all-solid-state battery according to one embodiment of the present invention may be either a negative electrode or a positive electrode, and more specifically, the electrode for an all-solid-state battery may be a positive electrode.

When the electrode is a negative electrode, the electrode active material included in the granules can be any material that can be used as a negative electrode active material for a lithium ion secondary battery. For example, the negative electrode active material may be one or more selected from carbon such as anthracite or graphitized carbon; metal complex oxides such as $Li_xFe_2O_3$ (wherein $0 \leq x \leq 1$), $Li_xWO_2$ (wherein $0 \leq x \leq 1$), or $Sn_xMe_{1-x}Me'_yO_z$ (wherein Me is Mn,Fe,Pb or Ge; Me' is Al, B, P, Si, Group 1, 2 or 3 elements of the periodic table, or halogens; $0<x\leq 1$; $1\leq y\leq 3$; and $1\leq z\leq 8$); lithium metals; lithium alloys; silicon-based alloys; tin-based alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ or $Bi_2O_5$; conductive polymers, such as polyacetylene; Li-Co-Ni based materials; titanium oxides; and lithium titanium oxides. According to one embodiment of the present invention, the negative electrode active material may comprise a carbonbased material and/or Si.

When the electrode is a positive electrode, the electrode active material included in the granules can be any electrode active material that can be used as a positive electrode active material in a lithium ion secondary battery. For example, the positive electrode active material may be a lithium transition metal oxide comprising one or more transition metals. In one embodiment of the present invention, the positive electrode active material may be selected from the group consisting of $LiCoO_2$, $LiNiO_2$, $LiMnO_2$, $Li_2MnO_3$, $LiMn_2O_4$, $Li(Ni_aCo_bMn_c)O_2$ (wherein $0<a<1$, $0<b<1$, $0<c<1$, and $a+b+c=1$), $LiNi_{1-y}Co_yO_2$ (wherein $O<y<1$), $LiCo_{1-y}Mn_yO_2$, $LiNi_{1-y}Mn_yO_2$ (wherein $0<y<1$), $Li(Ni_aCo_bMn_c)O_4$ (wherein $0<a<2$, $0<b<2$, $0<c<2$, and $a+b+c=2$), $LiMn_{2-z}Ni_zO_4$ (wherein $0<z<2$), $LiMn_{2-z}Co_zO_4$ (wherein $0<z<2$), and combinations thereof.

The binder included in the granules according to one embodiment of the present invention is mixed with the powdered particulate active material and the conductive material to bind these components and aid in the growth of the particles. Since a sulfide-based solid electrolyte has moisture-sensitive properties, such as the generation of $H_2S$ gas upon contact with moisture, it is desirable to exclude as much moisture as possible from the formation of the granules. According to one embodiment of the present invention, the binder is an organic binder. The organic binder indicates a binder that is soluble or dispersible in an organic solvent, in particular, N-methylpyrrolidone (NMP), as distinguished from an aqueous binder, which is soluble or dispersible in water. Specifically, the organic binder can be selected from the group consisting of, but is not limited to, polyvinylidene fluoride (PVDF), vinylidene fluoride-hexafluoropropylene copolymer (PVDF-co-HFP), polyvinyl alcohol, starch, hydroxypropyl cellulose, regenerated cellulose, and polyvinylpyrrolidone, polyimide, polyamideimide, polyethylene, polypropylene, ethylene-propylene-diene monomer (EPDM), sulfonated EPDM, styrene-butadiene rubber and fluorinated rubber.

According to one embodiment of the present invention, in the core, the active material is comprised in an amount of 85% to 99.8% by weight, particularly 90% to 99.5% by weight, more particularly 95% to 99.0% by weight, the binder is comprised in an amount of 0.1% to 10% by weight, particularly 0.5% to 7.5% by weight, more particularly 1% to 5% by weight, and the first conductive material is comprised in an amount of 0.1% to 10% by weight, particularly 0.2% to 5% by weight, more particularly 0.3% to 1% by weight. When the contents of the active material, the binder and the first conductive material are adjusted within the above ranges, it may be advantageous for improving performance of the battery, which may be attributed to the effect of reducing the content of the first conductive material due to the physical properties of the first conductive material.

According to one embodiment of the present invention, the core has a porosity of 10% to 40%. The porosity of the core indicates the ratio of the pore volume in the granules, which can be measured, for example, but not limited to, using a mercury porosity analyzer (Autopore, Micromeritics). Specifically, the porosity of the granules may be 10% or more, 15% or more, 20% or more, 25% or more, 40% or less, 35% or less, 30% or less, 10% to 40%, 15% to 35%, or 25% to 30%. When the porosity of the core is below the above range, the performance improvement of the battery may not be pronounced because it is difficult for the sulfide-based solid electrolyte in the coating layer or additionally introduced thereto to be in close contact with the components in the core, and when the porosity of the core exceeds the above range, the performance improvement of the battery may not be pronounced because the amount of active material is reduced relative to the volume of the core, making it difficult to provide an electrode highly loaded with the active material.

According to one embodiment of the present invention, the core is coated with a slurry comprising a solid electrolyte and a second conductive material to form a coating layer. The coating layer covers at least part or all of the surface of the core. In the coating layer, the solid electrolyte may be one or more selected from a polymeric solid electrolyte and an inorganic solid electrolyte.

The polymeric solid electrolyte may be a polymeric solid electrolyte formed by the addition of a polymeric resin to a solvated lithium salt, or a polymeric gel electrolyte in which an organic electrolyte containing an organic solvent and a lithium salt, an ionic liquid, a monomer or an oligomer is embedded in a polymeric resin. According to one embodiment of the present invention, the lithium salts are ionizable lithium salts, which can be represented by $Li^+X^-$. The anion of the lithium salt is not particularly limited, but may include, for example, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ or $(CF_3CF_2SO_2)_2N^-$.

The solid polymeric electrolyte may comprise as a polymeric resin one or more materials selected from the group consisting of, but are not necessarily limited to, polyether-based polymers, polycarbonate-based polymers, acrylate-based polymers, polysiloxane-based polymers, phosphazene-based polymers, polyethylene derivatives, alkylene oxide derivatives, phosphate ester polymers, poly-agitation lysine, polyester sulfides, polyvinyl alcohol, polyvinylidene fluoride, and polymers comprising ionic dissociation groups. Additionally, the solid polymer electrolyte may comprise as a polymeric resin one or more materials selected from the group consisting of, but not necessarily limited to, branched copolymer, comb-like polymer, and cross-linked polymer resins, which are copolymerized with an amorphous polymer such as PMMA, polycarbonate, polysiloxane (PDMS) and/or phosphazene as a comonomer on a polyethylene oxide (PEO) main chain.

The inorganic solid electrolyte may comprise one or more of a sulfide-based solid electrolyte, a halide-based solid electrolyte and an oxide-based solid electrolyte.

The sulfide-based solid electrolyte includes sulfur atoms among the electrolyte components, but are not limited to any particular component, and may include one or more of crystalline solid electrolytes, amorphous solid electrolytes (glassy solid electrolytes), and glass-ceramic solid electrolytes. Specific examples of the sulfide-based solid electrolytes include, but not necessarily limited to, LPS-type sulfides comprising sulfur and phosphorus, $Li_{4-x}Ge_{1-x}P_xS_4$ (wherein x is 0.1 to 2, particularly x is 3/4 or 2/3), $Li_{10\pm1}MP_2X_{12}$ (wherein M is Ge, Si, Sn or Al, and X is S or Se), $Li_{3.833}Sn_{0.833}As_{0.166}S_4$, $Li_4SnS_4$, $Li_{3.25}Ge_{0.25}P_{0.75}S_4$, $Li_2S$-$P_2S_5$, $B_2S_3$-$Li_2S$, $xLi_2S$-$(100-x)P_2S_5$ (wherein x is 70 to 80), $Li_2S$-$SiS_2$-$Li_3N$, $Li_2S$-$P_2S_5$-LiI, $Li_2S$-$SiS_2$-LiI and $Li_2S$-$B_2S_3$-LiI.

The halide-based solid electrolyte may include, but is not necessarily limited to, at least one of $Li_3YCl_6$ and $Li_3YBr_6$. The oxide-based solid electrolyte may be suitably selected and used, for example, but not necessarily limited to, an LLT-based compound with a perovskite structure such as $Li_{3x}La_{2/3-x}TiO_3$, an LISICON-based compound such as $Li_{14}Zn(GeO_4)_4$, an LATP-based compound such as $Li_{1.3}Al_{0.3}Ti_{1.7}(PO_4)_3$, an LAGP-based compound such as $(Li_{1+x}Ge_{2-x}Al_x(PO_4)_3)$, and a phosphate-based compound such as LiPON.

According to one embodiment of the present invention, the solid electrolyte comprises a sulfide-based solid electrolyte.

The second conductive material constitutes a coating layer together with the solid electrolyte, and not only electrically connects the solid electrolyte in the coating layer, but also becomes a passageway for the core of the sphere to electrically connect with other granules, other electrodes, or a solid electrolyte layer between the electrodes. The solid electrolyte in the coating layer may cause electrical disconnection between the active materials, but the second conductive material may eliminate the disconnection. It may be desirable for the second conductive material to be thinly and uniformly distributed within the coating layer to impart the functionality described above. To accomplish this purpose, the second conductive material is a cylindrical conductive material. The cylindrical shape can be deformed, such as bending under external pressure. According to one embodiment of the present invention, the second conductive material has an average diameter of 100 nm to 500 nm. The average diameter is measured in the same manner as for the first conductive material. In specific, the average diameter of the second conductive material may be 100 nm or more, 110 nm or more, 120 nm or more, 130 nm or more, 140 nm or more, 150 nm or more, 500 nm or less, 480 nm or less, 460 nm or less, 440 nm or less, 420 nm or less, or 400 nm or less, and may be 100 nm to 500 nm, 130 nm to 460 nm, or 150 nm to 400 nm. In the coating layer, a relatively thick conductive material can be used to impart only the functionality as needed for conductivity without any side reactions in the relationship with the solid electrolyte.

The second conductive material has an aspect ratio of 100 to 300. The aspect ratio is measured in the same manner as for the first conductive material. Specifically, the aspect ratio of the second conductive material may be 100 or more, 110 or more, 120 or more, 130 or more, 140 or more, 150 or more, 300 or less, 290 or less, 280 or less, 270 or less, 260 or less, 250 or less, 100 to 300, 130 to 280, or 150 to 250. An aspect ratio that is too large may cause problems such as agglomeration between the conductive materials, and it may be desirable to adjust the aspect ratio to an appropriate level in order to uniformly disperse the second conductive material in the coating layer.

The second conductive material has a BET specific surface area of 10 $m^2/g$ to 30 $m^2/g$. The BET specific surface area is measured in the same manner as for the first conductive material. Specifically, the BET specific surface area of the second conductive material is 10 $m^2/g$ or more, 11 $m^2/g$ or more, 12 $m^2/g$ or more, 13 $m^2/g$ or more, 14 $m^2/g$ or more, 15 $m^2/g$ or more, 30 $m^2/g$ or less, 29 $m^2/g$ or less, 28 $m^2/g$ or less, 27 $m^2/g$ or less, 26 $m^2/g$ or less, or 25 $m^2/g$ or less, and may be 10 $m^2/g$ to 30 $m^2/g$, 13 $m^2/g$ to 28 $m^2/g$, or 15 $m^2/g$ to 25 $m^2/g$. If the specific surface area is too large, problems such as side reactions with solid electrolytes may occur, and it may be desirable to adjust the specific surface area to an appropriate

level to ensure that only the intended function of conductivity is expressed in the coating layer.

The first and second conductive materials may be any conductive material commonly used in the art, without limitation, provided that it meets the specifications described above. According to one embodiment of the present invention, the first conductive material comprises carbon nanotubes. According to one embodiment of the present invention, the second conductive material comprises carbon nanofibers.

According to one embodiment of the present invention, a content by weight of the solid electrolyte in the coating layer is 15% to 40% by weight, based on the total weight of the granules. In specific, the content of the solid electrolyte may be 15% by weight or more, 16% by weight or more, 17% by weight or more, 18% by weight or more, 19% by weight or more, 20% by weight or more, 40% by weight or less, 39% by weight or less, 38% by weight or less, 37% by weight or less, 36% by weight or less, 35% by weight or less, 15% to 40% by weight, 18% to 38% by weight, or 20% to 35% by weight. When the solid electrolyte is introduced into the coating layer within the above range, the connectivity with the solid electrolyte outside the granules may be further improved.

According to one embodiment of the present invention, a content by weight of the second conductive material in the coating layer is from 0.01% to 1% by weight based on the total weight of the granules. Specifically, the content of the second conductive material may be 0.01% by weight or more, 0.02% by weight or more, 0.03% by weight or more, 1% by weight or less, 0.9% by weight or less, 0.8% by weight or less, 0.7% by weight or less, 0.6% by weight or less, 0.5% by weight or less, 0.01% to 1% by weight, 0.02% to 0.8% by weight, or 0.03% to 0.5% by weight. When a second conductive material is introduced into the coating layer within the above range, the connectivity between the active materials may be further improved.

The first conductive material, which is directly mixed with the active material in the granules, can be basically comprised in a larger amount than the second conductive material. According to one embodiment of the present invention, a weight ratio of the first conductive material to the second conductive material is from 5:1 to 30:1. Specifically, the weight ratio of the first conductive material to the second conductive material may be 5:1 or more, 5.5:1 or more, 6:1 or more, 30:1 or less, 25:1 or less, 20:1 or less, 5:1 to 30:1, 5.5:1 to 25:1, or 6:1 to 20:1. Within the above range, the effect of introducing the conductive material into each of a core and a coating layer may be further added.

The coating layer is formed by applying an application material comprising a solid electrolyte and a second conductive material in the core, and the application method may be any of various methods used in the relevant art. According to one embodiment of the present invention, the coating layer is formed by applying a conductive material on the core by a mechanofusion method. The mechanofusion method can apply a high shear force to the coating layer, whereby the coating layer can be formed thinly and uniformly. Furthermore, the high shear force of the mechanofusion method may be advantageous for the sulfide-based solid electrolyte, which has a relatively small particle size compared to the second conductive material, to more easily penetrate into the pores of the core and form an electrical network in the granules.

The electrode for an all-solid-state battery according to one embodiment of the present invention is prepared by loading granules on a current collector to form a sheet-like granular layer. The current collector is an electrically conductive material such as a metal plate, and depending on the polarity of the battery, electrodes known in the art can be appropriately used. Since the granules constituting the granular layer each individually include a coating layer comprising a solid electrolyte and a second conductive material, a sufficient electrical network can be formed between the granules constituting the granular layer. Nevertheless, the electrical network can also be supplemented by impregnating the pores in the granular layer with a solid electrolyte and drying it. As for the solid electrolyte to be supplemented, using the same sulfide-based solid electrolyte as the coating layer can contribute to the improvement of the battery performance by reducing resistance in the battery.

According to one embodiment of the present invention, in the electrode for an all-solid-state battery, the electrode active material layer has a thickness of 100 μm to 300 μm. If a current collector is used in the manufacture of the electrode, the electrode active material layer refers to a sheet-like layer applied over the current collector, excluding the current collector, wherein the electrode active material layer comprises the granules, together with a solid electrolyte supplemented in the pores between the granules, as needed. Specifically, the thickness of the electrode active material layer may be 100 μm or more, 110 μm or more, 120 μm or more, 130 μm or more, 140 μm or more, 150 μm or more, 300 μm or less, 290 μm or less, 280 μm or less, 270 μm or less, 260 μm or less, 250 μm or less, and may be 100 μm to 300 μm, 120 μm to 270 μm, or 150 μm to 250 μm. If the thickness of the electrode active material layer is less than the above range, the loading amount of active material may be reduced and the performance improvement of the battery may not be pronounced, and if the thickness of the electrode active material layer is greater than the above range, the durability of the electrode may be reduced and the performance improvement of the battery may not be pronounced.

In one aspect of the present invention, there is provided an all-solid-state battery comprising the electrode for an all-solid-state battery as a positive electrode and/or a negative electrode. In constituting the all-solid-state battery, a separate solid electrolyte layer may be introduced between the positive electrode and the negative electrode in addition to the solid electrolyte contained in the electrode, and the solid electrolyte layer may serve as a separating film in a conventional lithium secondary battery. The electrode may in some cases be utilized for semi-solid-state batteries with a liquid electrolyte, which may further require a separate polymeric separating film.

The polymeric separating film is interposed between the negative electrode and the positive electrode, and serves to electrically isolate the negative electrode and the positive electrode while allowing lithium ions to pass through. The polymeric separating film may be any polymeric separating film conventionally used in the field of all-solid-state batteries, but is not particularly limited thereto.

There is provided a battery module including the all-solid-state battery as a unit cell, a battery pack including the battery module, and a device including the battery pack as a power source.

Specific examples of the devices include, but are not limited to, a power tool powered by an electric motor; an electric vehicle, including an electric vehicle (EV), a hybrid electric vehicle (HEV) and a plug-in hybrid electric vehicle (PHEV); an electric two-wheeled vehicle, including an electric bicycle (E-bike) and an electric scooter; an electric golf cart; and a power storage system.

Hereinafter, Examples are presented to facilitate an understanding of the present invention. The following Examples are provided to illustrate the present invention, but the present invention is not limited thereto.

## Preparation Example: Preparation of granules containing an active material

### Preparation Example 1

$LiNi_{0.6}Co_{0.2}Mn_{0.2}O_2$ (NCM 622) as the active material, carbon nanotubes (having an average particle diameter of about 15 nm, an aspect ratio of about 5,000, and a BET specific surface area of about 150 $m^2/g$) as the first conductive material, and polyvinylidene fluoride (PVDF) as the binder were mixed at a weight ratio of 96.7:0.3:3 (active material : conductive material : binder) in an N-methylpyrrolidone solvent to prepare a slurry, and then the core (having a porosity of about 30%) with a diameter of about 60 μm were prepared by spray-drying method.

A mixture of $Li_2S$-$P_2S_5$ as the sulfide-based solid electrolyte and carbon nanofibers (having an average diameter of about 250 nm, an aspect ratio of about 200, and a BET specific surface area of about 20 $m^2/g$) as the second conductive material was driven in a mechanofusion device (Nobilta NOB-130 manufactured by Hosokawa Micron) at 3,000 rpm for 10 minutes, with a prepared core, to produce granules having a diameter of about 70 μm formed with a coating layer. The content of the solid electrolyte in the granules is about 25 wt%, and the content of the second conductive material is about 0.03 wt%.

### Comparative Preparation Example 1

The core was prepared in the same manner as in Preparation Example 1, except that only a sulfide-based solid electrolyte was used without a second conductive material in the manufacture of the coating layer.

### Comparative Preparation Example 2

The granules were prepared in the same manner as in Preparation Example 1, except that the second conductive material was the same as the first conductive material in the manufacture of the coating layer (core: first conductive material, coating layer: first conductive material).

### Comparative Preparation Example 3

The granules were prepared in the same manner as in Preparation Example 1, except that the first conductive material was the same as the second conductive material in the manufacture of the core (core: second conductive material, coating layer: second conductive material).

## Example: Preparation of an electrode and a battery comprising the prepared granules

### Example 1

The granules prepared in Example 1 were applied to one side of an aluminum current collector, rolled, and dried to prepare a positive electrode having a thickness of about 130 μm (the sulfide-based electrolyte was comprised in an amount of about 20 wt% relative to the granules). $Li_2S$-LiCl-$P_2S_5$ was mixed with a polyvinylidene fluoride (PVDF) solution (a solution of PVDF and toluene in a weight ratio of 8:92) to prepare a slurry, and was then applied with a thickness of about 100 μm on top of a lithium foil (a Li foil) with a thickness of about 50 μm to prepare a solid electrolyte and a negative electrode comprising same. An electrode assembly was prepared by laminating and pressing the positive electrode and the negative electrode, and then placed inside the battery case to produce an all-solid-state battery.

**Comparative Example 1**

An all-solid-state battery was prepared in the same manner as in Example 1, except that the granules prepared in Comparative Preparation Example 1 were used instead of those prepared in Preparation Example 1, in the preparation of a positive electrode.

**Comparative Example 2**

An all-solid-state battery was prepared in the same manner as in Example 1, except that the granules prepared in Comparative Preparation Example 2 were used instead of those prepared in Preparation Example 1, in the preparation of a positive electrode.

**Comparative Example 3**

An all-solid-state battery was prepared in the same manner as in Example 1, except that the granules prepared in Comparative Preparation Example 3 were used instead of those prepared in Preparation Example 1, in the preparation of a positive electrode.

**Experimental Examples: Evaluation of Preparation Examples and Examples**

**Experimental Example 1: Evaluation of the performance of battery**

Each of the batteries of Example 1 and Comparative Examples 1 to 3 was discharged at 0.1C and 1.0C, to measure the initial Coulombic efficiency (0.1C charge/discharge) and the discharge capacity ratio (1.0C discharge capacity/0.1C discharge capacity×100, %). The results are shown in Table 1 below.

[Table 1]

| Performance | Example 1 | Comparative Example 1 | Comparative Example 2 | Comparative Example 3 |
|---|---|---|---|---|
| Initial Coulombic Efficiency (%) | 92 | 71 | 79 | 83 |
| Discharge capacity ratio (%) | 90 | 15 | 75 | 64 |

According to Table 1, the performance of the battery according to Example 1 (first conductive material (core) - second conductive material (coating layer)) was not particularly degraded even under the higher C-rate conditions, whereas the performance of the battery according to Comparative Example 1 (first conductive material (core)), Comparative Example 2 (first conductive material (core) - first conductive material (coating layer)), and Comparative Example 3 (second conductive material (core) - second conductive material (coating layer)) was significantly degraded under the higher C-rate conditions.

[Reference Numerals]

10: Core
20: Coating Layer
100: Granule

## Claims

**1.** An electrode for an all-solid-state battery, comprising granules including

a core containing an active material, a first conductive material and a binder; and
a coating layer containing a solid electrolyte and a second conductive material, and disposed in contact with an outside of the core,
wherein the first and second conductive materials have different sizes or shapes,
wherein the first and second conductive materials are cylindrical conductive materials,

wherein the first conductive material has an aspect ratio of 4000 to 6000 and a BET specific surface area of 100 $m^2/g$ to 300 $m^2/g$, and
wherein the second conductive material has an aspect ratio of 100 to 300 and a BET specific surface area of 10 $m^2/g$ to 30 $m^2/g$,
wherein the aspect ratio and the BET specific surface area are measured as disclosed in the specification.

**2.** The electrode for an all-solid-state battery according to claim 1,
wherein the first conductive material has an average diameter of 10 nm to 30 nm, wherein the average diameter is measured by SEM as disclosed in the specification.

**3.** The electrode for an all-solid-state battery according to claim 1,
wherein the second conductive material has an average diameter of 100 nm to 500 nm, wherein the average diameter is measured by SEM as disclosed in the specification.

**4.** The electrode for an all-solid-state battery according to claim 1,
wherein the first conductive material comprises carbon nanotubes.

**5.** The electrode for an all-solid-state battery according to claim 1,
wherein the second conductive material comprises carbon nanofibers.

**6.** The electrode for an all-solid-state battery according to claim 1,
wherein the active material is a positive electrode active material selected from the group consisting of $LiCoO_2$, $LiNiO_2$, $LiMnO_2$, $Li_2MnO_3$, $LiMn_2O_4$, $Li(Ni_aCo_bMn_c)O_2$ (wherein $0<a<1$, $0<b<1$, $0<c<1$, and $a+b+c=1$), $LiNi_{1-y}Co_yO_2$ (wherein $0<y<1$), $LiCo_{1-y}Mn_yO_2$, $LiNi_{1-y}Mn_yO_2$ (wherein $0<y<1$), $Li(Ni_aCo_bMn_c)O_4$ (wherein $0<a<2$, $0<b<2$, $0<c<2$, and $a+b+c=2$), $LiMn_{2-z}Ni_zO_4$ (wherein $0<z<2$), $LiMn_{2-z}Co_zO_4$ (wherein $0<z<2$), and combinations thereof.

**7.** The electrode for an all-solid-state battery according to claim 1,
wherein the solid electrolyte comprises a sulfide-based solid electrolyte.

**8.** The electrode for an all-solid-state battery according to claim 1,
wherein the granules are spherical particles having a diameter of 30 μm to 150 μm, wherein the diameter is measured as disclosed in the specification.

**9.** The electrode for an all-solid-state battery according to claim 1,
wherein a content by weight of the solid electrolyte in the coating layer is 15% to 40% by weight, based on the total weight of the granules.

**10.** The electrode for an all-solid-state battery according to claim 1,
wherein a content by weight of the second conductive material in the coating layer is 0.01% to 1% by weight, based on the total weight of the granules.

**11.** The electrode for an all-solid-state battery according to claim 1,
wherein the core comprises 85% to 99.8% by weight of active material, 0.1% to 10% by weight of binder, and 0.1% to 10% by weight of first conductive material, based on the total weight of the core.

**12.** The electrode for an all-solid-state battery according to claim 1,
wherein a weight ratio of the first conductive material to the second conductive material is 5:1 to 30:1.

**13.** The electrode for an all-solid-state battery according to claim 1,
wherein the coating layer is formed by being applied to the core by a mechanofusion method.

## Patentansprüche

**1.** Elektrode für eine Festkörperbatterie, umfassend Körnchen, die enthalten:

einen Kern, der ein aktives Material, ein erstes leitfähiges Material und ein Bindemittel enthält; und
eine Beschichtungsschicht, die einen Festelektrolyten und ein zweites leitfähiges Material enthält und in Kontakt

mit einer Außenseite des Kerns angeordnet ist,
wobei das erste und das zweite leitfähige Material unterschiedliche Größen oder Formen aufweisen,
wobei das erste und das zweite leitfähige Material zylindrische leitfähige Materialien sind,
wobei das erste leitfähige Material ein Seitenverhältnis von 4000 bis 6000 und eine spezifische BET-Oberfläche von 100 $m^2/g$ bis 300 $m^2/g$ aufweist, und
wobei das zweite leitfähige Material ein Seitenverhältnis von 100 bis 300 und eine spezifische BET-Oberfläche von 10 $m^2/g$ bis 30 $m^2/g$ aufweist,
wobei das Seitenverhältnis und die spezifische BET-Oberfläche wie in der Beschreibung offenbart gemessen werden.

**2.** Elektrode für eine Festkörperbatterie nach Anspruch 1,
wobei das erste leitfähige Material einen durchschnittlichen Durchmesser von 10 nm bis 30 nm aufweist, wobei der durchschnittliche Durchmesser durch SEM wie in der Beschreibung offenbart gemessen wird.

**3.** Elektrode für eine Festkörperbatterie nach Anspruch 1,
wobei das zweite leitfähige Material einen durchschnittlichen Durchmesser von 100 nm bis 500 nm aufweist, wobei der durchschnittliche Durchmesser durch SEM wie in der Beschreibung offenbart gemessen wird.

**4.** Elektrode für eine Festkörperbatterie nach Anspruch 1,
wobei das erste leitfähige Material Kohlenstoffnanoröhrchen umfasst.

**5.** Elektrode für eine Festkörperbatterie nach Anspruch 1,
wobei das zweite leitfähige Material Kohlenstoffnanofasern umfasst.

**6.** Elektrode für eine Festkörperbatterie nach Anspruch 1,
wobei das aktive Material ein Positivelektrodenaktivmaterial ist, das aus der Gruppe ausgewählt ist, die aus $LiCoO_2$, $LiNiO_2$, LiMnO2, $Li_2MnO_3$, $LiMn_2O_4$, $Li(Ni_aCo_bMnc)O_2$ (wobei $0<a<1$, $0<b<1$, $0<c<1$ und $a+b+c=1$), $LiNi_{1-y}Co_yO_2$ (wobei $0<y<1$), $LiCo_{1-y}Mn_yO_2$, $LiNi_{1-y}Mn_yO_2$ (wobei $0<y<1$), $Li(Ni_aCo_bMn_c)O_4$ (wobei $0<a<2$, $0<b<2$, $0<c<2$ und $a+b+c=2$), $LiMn_{2-z}Ni_zO_4$ (wobei $0<z<2$), $LiMn_{2-z}Co_zO_4$ (wobei $0<z<2$) und Kombinationen davon besteht.

**7.** Elektrode für eine Festkörperbatterie nach Anspruch 1,
wobei der Festelektrolyt einen Festelektrolyten auf Sulfidbasis umfasst.

**8.** Elektrode für eine Festkörperbatterie nach Anspruch 1,
wobei die Körnchen kugelförmige Teilchen mit einem Durchmesser von 30 μm bis 150 μm sind, wobei der Durchmesser wie in der Beschreibung offenbart gemessen wird.

**9.** Elektrode für eine Festkörperbatterie nach Anspruch 1,
wobei ein Gewichtsanteil des Festelektrolyten in der Beschichtungsschicht 15 Gew.-% bis 40 Gew.-%, bezogen auf das Gesamtgewicht der Körnchen, beträgt.

**10.** Elektrode für eine Festkörperbatterie nach Anspruch 1,
wobei ein Gewichtsanteil des zweiten leitfähigen Materials in der Beschichtungsschicht 0,01 Gew.-% bis 1 Gew.-%, bezogen auf das Gesamtgewicht der Körnchen, beträgt.

**11.** Elektrode für eine Festkörperbatterie nach Anspruch 1,
wobei der Kern 85 Gew.-% bis 99,8 Gew.-% aktives Material, 0,1 Gew.-% bis 10 Gew.-% Bindemittel und 0,1 Gew.-% bis 10 Gew.-% erstes leitfähiges Material, bezogen auf das Gesamtgewicht des Kerns, umfasst.

**12.** Elektrode für eine Festkörperbatterie nach Anspruch 1,
wobei ein Gewichtsverhältnis des ersten leitfähigen Materials zu dem zweiten leitfähigen Material 5:1 bis 30:1 beträgt.

**13.** Elektrode für eine Festkörperbatterie nach Anspruch 1,
wobei die Beschichtungsschicht gebildet wird, indem sie durch ein Mechanofusionsverfahren auf den Kern aufgebracht wird.

## Revendications

**1.** Électrode pour une batterie tout-solide, comprenant des granules incluant

un noyau contenant un matériau actif, un premier matériau conducteur et un liant ; et
une couche de revêtement contenant un électrolyte solide et un deuxième matériau conducteur, et disposée en contact avec un extérieur du noyau,
où les premier et deuxième matériaux conducteurs ont des tailles ou formes différentes,
où les premier et deuxième matériaux conducteurs sont des matériaux conducteurs cylindriques,
où le premier matériau conducteur a un rapport d'aspect de 4000 à 6000 et une surface spécifique BET de 100 $m^2/g$ à 300 $m^2/g$, et
où le deuxième matériau conducteur a un rapport d'aspect de 100 à 300 et une surface spécifique BET de 10 $m^2/g$ à 30 $m^2/g$,
où le rapport d'aspect et la surface spécifique BET sont mesurés comme décrit dans la spécification.

**2.** Électrode pour une batterie tout-solide selon la revendication 1,
où le premier matériau conducteur a un diamètre moyen de 10 nm à 30 nm, où le diamètre moyen est mesuré par SEM comme décrit dans la spécification.

**3.** Électrode pour une batterie tout-solide selon la revendication 1,
où le deuxième matériau conducteur a un diamètre moyen de 100 nm à 500 nm, où le diamètre moyen est mesuré par SEM comme décrit dans la spécification.

**4.** Électrode pour une batterie tout-solide selon la revendication 1,
où le premier matériau conducteur comprend des nanotubes de carbone.

**5.** Électrode pour une batterie tout-solide selon la revendication 1,
où le deuxième matériau conducteur comprend des nanofibres de carbone.

**6.** Électrode pour une batterie tout-solide selon la revendication 1,
où le matériau actif est un matériau actif d'électrode positive sélectionné dans le groupe constitué de $LiCoO_2$, $LiNiO_2$, $LiMnO_2$, $Li_2MnO_3$, $LiMn_2O_4$, $Li(Ni_aCo_bMn_c)O_2$ (où $0<a<1$, $0<b<1$, $0<c<1$ et $a+b+c=1$), $LiNi_{1-y}Co_yO_2$ (où $0<y<1$), $LiCo_{1-y}Mn_yO_2$, $LiNi_{1-y}Mn_yO_2$ (où $0<y<1$), $Li(Ni_aCo_bMn_c)O_4$ (où $0<a<2$, $0<b<2$, $0<c<2$ et $a+b+c=2$), $LiMn_{2-z}Ni_zO_4$ (où $0<z<2$), $LiMn_{2-z}Co_zO_4$ (où $0<z<2$), et des combinaisons de ces derniers.

**7.** Électrode pour une batterie tout-solide selon la revendication 1,
où l'électrolyte solide comprend un électrolyte solide à base de sulfure.

**8.** Électrode pour une batterie tout-solide selon la revendication 1,
où les granules sont des particules sphériques ayant un diamètre de 30 μm à 150 μm, où le diamètre est mesuré comme décrit dans la spécification.

**9.** Électrode pour une batterie tout-solide selon la revendication 1,
où une teneur en poids de l'électrolyte solide dans la couche de revêtement est 15 % à 40 % en poids, sur la base du poids total des granules.

**10.** Électrode pour une batterie tout-solide selon la revendication 1,
où une teneur en poids du deuxième matériau conducteur dans la couche de revêtement est 0,01 % à 1 % en poids, sur la base du poids total des granules.

**11.** Électrode pour une batterie tout-solide selon la revendication 1,
où le noyau comprend 85 % à 99,8 % en poids de matériau actif, 0,1 % à 10 % en poids de liant et 0,1 % à 10 % en poids de premier matériau conducteur, sur la base du poids total du noyau.

**12.** Électrode pour une batterie tout-solide selon la revendication 1,
où un rapport en poids du premier matériau conducteur au deuxième matériau conducteur est 5:1 à 30:1.

**13.** Électrode pour une batterie tout-solide selon la revendication 1,

où la couche de revêtement est formée en étant appliquée au noyau par un procédé de mécanofusion.

【Figure 1】

100
20
10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160146737
- US 20190067678 A1
- WO 2017218150 A1